# EUROPÄISCHE PATENTSCHRIFT

(11) **EP 1 298 341 B1**
(45) Veröffentlichungstag und Bekanntmachung des Hinweises auf die Patenterteilung: **02.04.2008**
(21) Anmeldenummer: 02017631.9
(22) Anmeldetag: 06.08.2002
(51) Int. Cl.: F16D 48/06

(54) **Verfahren zur Beeinflussung und ggf. Beherrschung von Drehbewegungszuständen in einem eine Mehrfach-Kupplungseinrichtung aufweisenden Antriebsstrang**
Method for influencing and optionally controlling rotary motion states in a drive train including a multiple clutch device
Procédé pour influencer et eventuellement maîtriser des états de rotation dans une chaîne d'entraînement incluant des embrayages multiples

(30) Priorität: 28.09.2001 DE 10148175
(43) Veröffentlichungstag der Anmeldung: 02.04.2003
(73) Patentinhaber: ZF Sachs AG, 97424 Schweinfurt (DE)
(72) Erfinder: Peinemann, Bernd, Dipl.-Ing., 97464 Niederwerrn (DE); Feldhaus, Reinhard, Dipl.-Ing., 97464 Niederwerrn (DE)

(56) Entgegenhaltungen:
- EP-A1- 0 931 951
- DE-A1- 3 809 118
- FR-A1- 2 725 255
- GB-A- 2 165 914
- GB-A- 2 197 049
- US-A- 5 322 150

## Beschreibung

Die vorliegende Erfindung bezieht sich auf einen Kraftfahrzeug-Antriebsstrang, der eine Antriebseinheit, ein Getriebe mit wenigstens zwei Getriebeeingangswellen und eine Mehrfach-Kupplungseinrichtung, insbesondere Doppel-Kupplungseinrichtung, mit einer einer ersten Getriebeeingangswelle zugeordneten ersten Kupplungsanordnung und einer einer zweiten Getriebeeingangswelle zugeordneten zweiten Kupplungsanordnung zur Momentenübertragung zwischen der Antriebseinheit und dem Getriebe aufweist, wobei in wenigstens einem, wenigstens eine der Kupplungsanordnungen umfassenden Momentenübertragungsweg zwischen der Antriebseinheitund dem Getriebe wenigstens eine Torsionsschwingungsdämpferanordnung enthalten ist.

Derartige Antriebsstränge und für derartige Antriebsstränge geeignete Mehrfach-Kupplungseinrichtungen (insbesondere Doppel-Kupplungseinrichtungen) und Getriebe (insbesondere Lastschaltgetriebe) haben in jüngerer Zeit verstärktes Interesse gefunden, da sie bei einer entsprechenden Automatisierung einen hohen Fahrkomfort (ähnlich wie bei einem herkömmlichen automatischen Getriebe mit Drehmomentwandler) versprechen, ohne dass die Verluste eines Drehmomentwandlers in Kauf genommen werden müssen. Dabei werden zwei Ansätze verfolgt. Nach einem ersten Ansatz sind die Kupplungsanordnungen als nasslaufende Lamellen-Kupplungsanordnungen ausgeführt. Die Anmelderin hat verschiedene Konstruktionen entsprechender "Doppel-Kupplungen" in diversen deutschen Patentanmeldungen vorgestellt, es wird beispielsweise auf die DE 100 04 179 A1 verwiesen. Nach einem anderen Ansatz sind die Kupplungsanordnungen mit trockenlaufenden Reibscheiben ausgeführt, es wird beispielsweise auf die EP 0 931 951 A1 verwiesen.

Aus der DE 41 00 372 A1 ist eine Reibungskupplung bekannt, bei der ein Schlupf-Regelkreis die Ist-Differenzdrehzahl zwischen Ausgangs- und Eingangsdrehzahl einer Reibungskupplung eines Kraftfahrzeuges mit einer Soll-Differenzdrehzahl vergleicht und einen Positionierantrieb der Kupplung entsprechend der Soll-Differenzdrehzahl einstellt. Bei einem Lastwechsel des Motors wird die Kupplung auf das zu erwartende Motormoment eingestellt, bevor es zu einer wesentlichen Änderung der Ist-Differenzdrehzahl kommt. Bei einer solchen Schlupfregeleinrichtung wird das Positionssollsignal einem Positionssignal aus einem Kupplungskennlinienspeicher überlagert. Die Regelgüte ist dabei begrenzt.

Unabhängig von der Bauart der Mehrfach-Kupplungseinrichtung wird man den Antriebsstrang mit wenigstens einer Torsionsschwingungsdämpferanordnung ausführen, um im Antriebsstrang auftretende, ggf. von der als Brennkraftmaschine ausgeführten Antriebseinheit angeregte Drehschwingungen zu dämpfen. Besonders zweckmäßig erscheint der Einsatz eines Zwei-Massen-Schwungrads (ZMS) zwischen Antriebseinheit und Kupplungseinrichtung, um die von der Antriebseinheit erzeugten Drehschwingungen von der Kupplungseinrichtung und damit vom Getriebe fernzuhalten. Eine andere, ggf. mit dem Einbau eines ZMS zwischen Antriebseinheit und Kupplungseinrichtung kombinierbare Möglichkeit ist, auf der Abtriebsseite wenigstens einer der Kupplungsanordnungen, also zwischen der jeweiligen Kupplungsanordnung und der zugeordneten Getriebeeingangswelle, eine Torsionsschwingungsdämpferanordnung vorzusehen. Im Falle einer Doppelkupplung in Reibscheibenbauart kann eine entsprechende Kupplungs-oder Reibscheibe mit integriertem Torsionsschwingungsdämpfer verwendet werden. Im Falle von Kupplungsanordnungen des Lamellen-Typs könnte man einen Torsionsschwingungsdämpfer in den an der zugeordneten Getriebeeingangswelle angekoppelten Lamellenträger integrieren.

Wie jedes schwingfähige System weist auch eine in einen Kraftfahrzeug-Antriebsstrang integrierte Torsionsschwingungsdämpferanordnung wenigstens eine Resonanzstelle auf, und es können entsprechende Drehschwingungen mit großer Schwingungsamplitude auftreten, wenn diese Resonanz angeregt wird. So liegt der Resonanzbereich eines Zwei-Massen-Schwungrads typischerweise unter der Leerlaufdrehzahl der Antriebseinheit (Brennkraftmaschine, insbesondere Verbrennungsmotor), und wird beim Starten und Abstellen des Motors durchlaufen. Die dabei auftretenden erhöhten Schwingungsamplituden äußern sich durch Getriebe- und Kupplungsgeräusche und bedeuten eine zusätzliche Belastung der Bauteile im ZMS, sofern nicht geeignete Gegenmaßnahmen getroffen werden. Beim Einsatz von auf der Abtriebsseite der Kupplungsanordnungen angeordneten Torsionsschwingungsdämpfern, beispielsweise beim Einsatz von Kupplungsscheiben mit Torsionsschwingungsdämpfern, kann es ebenfalls Resonanzprobleme geben. Typischerweise liegt dann wenigstens eine Resonanzstelle des Torsionsschwingungsdämpfers oberhalb der Leerlaufdrehzahl des Motors, und es kann dementsprechend im Fahrbetrieb, vor allem bei Volllastzug, zu unakzeptablen Drehbeschleunigungsamplituden und daraus resultierend zu Geräuschen im Getriebe kommen.

Nach einem herkömmlichen Ansatz bietet es sich an, eine dem ZMS bzw. der Torsionsschwingungsdämpferanordnung zugeordnete zusätzliche Reibungseinrichtung vorzusehen oder/und - im Falle des ZMS - das ZMS konstruktiv derart auszulegen, dass die Eigenfrequenz unterhalb der Zündfrequenz liegt. Dies kann durch eine möglichst geringe Federsteifigkeit bei einer geeigneten Aufteilung des primären und sekundären Massenträgheitsmoments des ZMS erreicht werden.

Der Nachteil dieser Reduzierungsmaßnahmen liegt in zusätzlichen Kosten und einer Funktionsverschlechterung. So verschlechtert eine dem ZMS bzw. dem Torsionsschwingungsdämpfer zugeordnete Reibungseinrichtung außerhalb der Resonanzstelle die Entkopplung, sofern nicht eine aufwendige Abschaltvorrichtung vorhanden ist.

Ein anderes Problem sind andere kritische Fahrzustände, beispielsweise sogenannte Lastwechselreaktionen, die ebenfalls zu erhöhten, und ggf. aufgrund entsprechender Geräuschentwicklung den Fahrkomfort beeinträchtigenden und die Komponenten des Antriebsstrangs ggf. stark belastenden (schlimmstenfalls beschädigenden) relativen Drehbewegungen bzw. Drehbeschleunigungen führen können. Die herkömmlichen Maßnahmen können, sofern für eine ausreichend große Reibung gesorgt ist, auch in Bezug auf diese kritischen Zustände zumindest in einem gewissen Ausmaß Abhilfe bringen, wofür aber die genannten Nachteile in Kauf genommen werden müssen.

Demgegenüber schlägt die Erfindung ein Verfahren zur Beeinflussung und ggf. Beherrschung von Drehbewegungszuständen, insbesondere Schwingungszuständen, in einem Kraftfahrzeug-Antriebsstrang, nach einem Verfahren des Anspruchs 1 vor.

Als alternative Lösung wird ein Verfahren nach dem geltenden Anspruch 2 vorgeschlagen.

Man kann beispielsweise vorsehen, dass die an der Schlupf-Kupplungsanordnung bzw. die insgesamt an den Schlupf-Kupplungsanordnungen auftretende Reibarbeit gerade auf einem solchen Niveau eingestellt bzw. gehalten wird, dass Soll-Bedingungen für die Relativ-Drehamplituden bzw. Drehbeschleunigungen eingehalten werden, die Relativ-Drehamplituden bzw. Drehbeschleunigungen also unter einem kritischen Wert gehalten werden. Kommt es zu einem Anstieg der Relativ-Drehamplituden bzw. Drehbeschleunigungen, so kann die betreffende Schlupf-Kupplungsanordnung etwas stärker eingekuppelt werden, um die Reibarbeitung zu vergrößern. Fallen die Relativ-Drehamplituden bzw. Drehbeschleunigungen wieder unter den kritischen Wert ab, so kann die betreffende Schlupf-Kupplungsanordnung wieder etwas weiter ausgerückt werden.

Ein wichtiger Aspekt des Erfindungsvorschlags ist, dass die Funktion einer herkömmlichen Reibeinrichtung im Torsionsschwingungsdämpfer, die Bauraum beansprucht, Kosten verursacht und ggf. die Funktion (Entkopplungsgüte) teilweise verschlechtert, gewissermaßen in die bereits vorhandene "Reibungskupplung", nämlich die Kupplungsanordnung eines Momentenübertragungsweges zwischen der Antriebseinheit und dem Getriebe, verlagert wird, so dass auf die herkömmliche Reibeinrichtung verzichtet werden kann. Es werden dabei der Aufbau und die Schaltungsmöglichkeiten der Mehrfach-Kupplungseinrichtung, insbesondere Doppel-Kupplungseinrichtung, (im Folgenden auch nur kurz "Doppelkupplung" genannt) vorteilhaft ausgenutzt, um eine Schwingungsreduzierung bzw. Relativ-Drehbewegungsreduzierung in kritischen Zuständen, wie beispielsweise Resonanzstellen, Lastschaltsituationen usw., zu ermöglichen.

Es wird speziell vorgeschlagen, dass beim Starten oder/und beim Stoppen der Antriebseinheit zur Bedämpfung einer Drehschwingungsresonanz bei einer Drehzahl, die unter einer Leerlaufdrehzahl der Antriebseinheit liegt, das Getriebe für beide Getriebeeingangswellen in einen Neutralzustand gebracht bzw. in diesem gehalten wird und wenigstens eine der Kupplungsanordnungen von einem ausgekuppelten Zustand in einen Schlupfzustand gebracht wird, um vermittels der an der Kupplungsanordnung bzw. den Kupplungsanordnungen (im Folgenden als Schlupf-Kupplungsanordnung bzw. Schlupf-Kupplungsanordnungen bezeichnet) auftretenden Reibung die Drehschwingungsresonanz zu dämpfen. Diese Ausprägung des erfindungsgemäßen Verfahrens ist insbesondere im Zusammenhang mit einem zwischen der Antriebseinheit und der Kupplungseinrichtung angeordneten Zwei-Massen-Schwungrad von Interesse. Beim Schließen bzw. Schlupfen der Schlupf-Kupplungsanordnung bzw. Schlupf-Kupplungsanordnungen wird die Sekundärseite des ZMS gebremst.

Weiterhin wird speziell vorgeschlagen, dass im Fahrbetrieb zur Bedämpfung einer Drehschwingungsresonanz bei einer Drehzahl, die über einer Leerlaufdrehzahl der Antriebseinheit liegt, eine momentan kein Fahrmoment übertragende Kupplungsanordnung von einem ausgekuppelten Zustand in einen Schlupfzustand gebracht wird, um vermittels der an dieser Kupplungsanordnung (im Folgenden als Schlupf-Kupplungsanordnung bezeichnet) auftretenden Reibung die Drehschwingungsresonanz zu dämpfen. Diese Ausprägung des erfindungsgemäßen Verfahrens ist insbesondere im Zusammenhang mit einer auf der Ausgangsseite einer der Kupplungsanordnungen bzw. auf den Ausgangsseiten der Kupplungsanordnungen vorgesehenen Torsionsschwingungsdämpfern von Interesse (beispielsweise im Falle einer Doppelkupplung der Reibscheibenbauart). Beim Schließen bzw. Schlupfen der Schlupf-Kupplungsanordnung wird die Primärseite der betreffenden Torsionsschwingungsdämpferanordnung abgebremst.

Nach einer weiteren Ausprägung des erfindungsgemäßen Verfahrens ist vorgesehen, dass im Fahrbetrieb zur Beeinflussung, ggf. Beherrschung, eines kritischen Fahrzustands, bei dem im Antriebsstrang relative Drehbewegungen, ggf. Drehschwingungen, auftreten, eine momentan kein Fahrmoment übertragende Kupplungsanordnung von einem ausgekuppelten Zustand in einen Schlupfzustand gebracht wird, um vermittels der an dieser Kupplungsanordnung (im Folgenden als Schlupf-Kupplungsanordnung bezeichnet) auftretenden Reibung auftretende Drehbewegungsamplituden, ggf. Drehschwingungsamplituden, zu reduzieren bzw. zu dämpfen. Der kritische Zustand kann ein Zustand sein, der in Reaktion auf wenigstens einen Lastwechsel auftritt.

Betreffend die zweitgenannte und drittgenannte Ausprägung des erfindungsgemäßen Verfahrens wird weiterbildend vorgeschlagen, dass das Getriebe für die der Schlupf-Kupplungsanordnung zugeordnete Getriebeeingangswelle vor der Einstellung des Schlupfzustand in einen Neutralzustand gebracht wird bzw. dass das Getriebe während der Einstellung des Schlupfzustands im Neutralzustand gehalten wird. Alternativ wird vorgeschlagen, dass das Getriebe für die der Schlupf-Kupplungsanordnung zugeordnete Getriebeeingangswelle vor der Einstellung des Schlupfzustand in einen Zustand gebracht wird, bei dem auf dieser Getriebeeingangswelle ein Gang eingelegt ist, bzw. dass das Getriebe während der Einstellung des Schlupfzustands in einem solchen Zustand gehalten wird. In diesem Zusammenhang ist es bevorzugt, dass auf der Getriebeeingangswelle ein Gang eingelegt wird oder ist, der zu einem Fahrgang auf der der anderen Kupplungsanordnung zugeordneten Getriebeeingangswelle benachbart ist.

Der Realisierungsaufwand zur Durchführung des Weiterbildungsvorschlags ist in der Regel gering, da es für eine zielgerichtete Regelung/Steuerung der Schaltvorgänge im Antriebsstrang in der Regel notwendig ist, die Drehzahlen von Motor und Getriebe genau zu erfassen. Der Antriebsstrang wird deshalb in der Regel ohnehin über Drehzahlsensoren am Motor (in der Regel am Anlasserzahnkranz des Schwungrads) und am Getriebe verfügen. Auf Grundlage der von diesen Sensoren ohnehin bereitgestellten Daten ist es möglich, die Drehzahlen von Motor und Getriebe sowie die Drehbeschleunigung von Motor und Getriebe sowie die Relativbeschleunigung zwischen Primär- und Sekundärseite der Torsionsschwingungsdämpferanordnung zu bestimmen. Dies macht es möglich, entsprechend dem Erfindungsvorschlag abhängig von der Drehzahl bzw. von der Beschleunigungsamplitude die Schlupf-Kupplungsanordnung bzw. Schlupf-Kupplungsanordnungen gezielt (punktuell) in den Schlupfzustand zu bringen (ggf, zur momentanen Fahr-Kupplungsanordnung, über die das Fahrmoment übertragen wird, zuzuschalten), wenn dies erforderlich ist, beispielsweise bei Durchlaufen einer Resonanzstelle bzw. Resonanzdrehzahl oder bei Lastwechsel. Der erfindungsgemäße "Kupplungsschlupf" ist deshalb ohne weiteres von anderen, etwa bei der Überschneidungsschaltung des Getriebes (Gangwechsel ohne Zugkraftunterbrechung) auftretendem "Kupplungsschlupf" unterscheidbar. Dadurch, dass die betreffende Schlupf-Kupplungsanordnung nur bedarfsweise in den Schlupfbetrieb gebracht wird, ist die Entkopplungsgüte des Gesamtsystems gegenüber herkömmlichen zusätzlichen Reibeinrichtungen wesentlich verbessert. Wie erwähnt, ist der Realisierungsaufwand sehr gering, da in der Regel im Wesentlichen nur die Steuerungs-Software einer Steuereinheit oder dgl. angepasst bzw. erweitert werden muss.

Man kann vorsehen, dass die Schlupf-Kupplungsanordnung bzw. Schlupf-Kupplungsanordnungen zusätzlich in Abhängigkeit von einem momentan wirksamen Antriebsmoment der Antriebseinheit in den Schlupfzustand gebracht wird/werden. Es können noch weitere Parameter oder momentane Betriebszustände berücksichtigt werden.

Es kann vorgesehen sein, dass die Schlupf-Kupplungsanordnung bzw. Schlupf-Kupplungsanordnungen in den Schlupfzustand gebracht wird/werden, wenn die erfasste Drehzahl gemäß einem vorgegebenen Übereinstimmungskriterium einem kritischen Drehzahlwert oder Drehzahlbereich entspricht. Auf diese Weise können mit sehr geringem Aufwand beispielsweise vorbekannte Resonanzstellen berücksichtigt werden. Weiterbildend wird vorgeschlagen, dass die Schlupf-Kupplungsanordnung bzw. Schlupf-Kupplungsanordnungen zur Beendigung des Schlupfzustands ausgekuppelt wird/werden, wenn die erfasste Drehzahl gemäß dem oder einem vorgegebenen Übereinstimmungskriterium dem kritischen Drehzahlwert oder Drehzahlbereich nicht mehr entspricht.

Ferner kann vorgesehen sein, dass die Schlupf-Kupplungsanordnung bzw. Schlupf-Kupplungsanordnungen in den Schlupfzustand gebracht wird/werden, wenn die erfasste Drehbeschleunigung einen vorgegebenen Drehbeschleunigungswert annimmt oder diesen übersteigt. Gemäß diesem Weiterbildungsvorschlag lassen sich sowohl vorbekannte Resonanzstellen als auch sonstige kritische Betriebszustände, beispielsweise Lastwechselreaktionen, berücksichtigen. Weiterbildend wird vorgeschlagen, dass die Schlupf-Kupplungsanordnung bzw. Schlupf-Kupplungsanordnungen zur Beendigung des Schlupfzustands ausgekuppelt wird/werden, wenn die erfasste Drehbeschleunigung unter den oder einen vorgegebenen Drehbeschleunigungswert abfällt.

Eine andere Möglichkeit ist, dass die Schlupf-Kupplungsanordnung bzw. Schlupf-Kupplungsanordnungen zur Beendigung des Schlupfzustands ausgekuppelt wird/werden, wenn die zugehörige Getriebeeingangswelle, auf der kein Gang eingelegt ist, eine momentane Drehzahl der Antriebseinheit gemäß einem vorgegebenen Übereinstimmungskriterium erreicht hat. Diesem Vorschlag liegt die Überlegung zugrunde, dass dann, wenn sich die Drehzahlen angeglichen haben, an der Schlupf-Kupplungsanordnung keine einen hinreichenden Dämpfungseffekt mehr bringende Reibung auftritt. Allerdings kann durch die Reibungsankopplung der Getriebeeingangswelle und der Ausgangsseite der betreffenden Kupplungsanordnung eine Eigenfrequenz des Systems verschoben, insbesondere abgesenkt werden. Es wird in diesem Zusammenhang insbesondere an die Ausführung des Antriebsstrangs mit dem Zwei-Massen-Schwungrad zwischen Antriebseinheit und Kupplungseinrichtung gedacht. Durch eine derartige Verschiebung einer Resonanz des Systems kann die Resonanz insbesondere beim kritischeren Start der Antriebseinheit schneller durchlaufen werden. Es kann deshalb durchaus Sinn machen, die Schlupf-Kupplungsanordnung bzw. Schlupf-Kupplungsanordnungen länger im Schlupfzustand zu halten, selbst wenn die genannten Drehzahlen sich schon weitgehend angeglichen haben.

Aus den vorstehenden Ausführungen wurde schon deutlich, dass sich das Verfahren auf einen Antriebsstrang beziehen kann, bei dem die Torsionsschwingungsdämpferanordnung eine Ausgangsseite der Antriebseinheit mit einer den Kupplungsanordnungen gemeinsamen Eingangsseite der Kupplungseinrichtung verbindet. Die Torsionsschwingungsdämpferanordnung ist dann vorzugsweise einem Zwei-Massen-Schwungrad zugehörig. Man kann auch das Zwei-Massen-Schwungrad insgesamt als Torsionsschwingungsdämpferanordnung auffassen.

Alternativ oder zusätzlich kann der Antriebsstrang wenigstens eine einer Ausgangsseite der Kupplungsanordnungen zugeordnete, ggf. in einer ausgangsseitige Komponente der Kupplungsanordnung integrierteTorsionsschwingungsdämpferanordnung aufweisen. Es wird beispielsweise an eine einer Kupplungsscheibe zugeordnete, ggf. darin integrierte Torsionsschwingungsdämpferanordnung gedacht.

Die Erfindung betrifft ferner direkt einen Kraftfahrzeug-Antriebsstrang wie eingangs angesprochen. Nach einem anderen Aspekt wird nach der Erfindung für diesen Antriebsstrang eine elektronische Steuereinheit vorgeschlagen, die dafür ausgelegt oder/und programmiert ist, zur Beeinflussung und ggf. Beherrschung von Drehbewegungszuständen, insbesondere Schwingungsständen, des Antriebsstrangs die Kupplungseinrichtung und ggf. das Getriebe unter Vermittlung einer der Kupplungseinrichtung und ggf. dem Getriebe zugeordneten Aktuatoranordnung gemäß dem erfindungsgemäßen Verfahren zu betreiben.

Beim erfindungsgemäßen Antriebsstrang kann die Torsionsschwingungsdämpferanordnung eine Ausgangsseite der Antriebseinheit mit einer den Kupplungsanordnungen gemeinsamen Eingangsseite der Kupplungseinrichtung verbinden und beispielsweise einem Zwei-Massen-Schwungrad zugehörig sein bzw. von einem solchen gebildet sein. Ferner kann der Antriebsstrang wenigstens eine einer Ausgangsseite einer der Kupplungsanordnungen zugeordnete, ggf. in eine ausgangsseitige Komponente der Kupplungsanordnung integrierte Torsionsschwingungsdämpferanordnung aufweisen, die beispielsweise einer Kupplungsscheibe zugeordnet, ggf. darin integriert ist.

Die Erfindung wird im Folgenden anhand von in den Figuren gezeigten Ausführungsbeispielen näher erläutert.
- Fig. 1: ist ein Blockschaltbild zur Erläuterung einer bevorzugten Strategie betreffend die Beeinflussung und Beherrschung von Drehbewegungszuständen eines Kraftfahrzeug-Antriebsstrangs mit einer so genannten Doppelkupplung.
- Fig. 2: zeigt in Teilfiguren 2a und 2b eine trockenlaufende Doppelkupplung der Reibscheibenbauart mit vorgeschaltetem Zwei-Massen-Schwungrad in einem Antriebsstrang eines Kraftfahrzeugs zwischen einem Getriebe und einer Antriebseinheit.
- Fig. 3: zeigt eine nasslaufende Doppelkupplung mit zwei Lamellen-Kupplungsanordnungen in einem Antriebsstrang eines Kraftfahrzeugs zwischen einem Getriebe und einer Antriebseinheit.
- Fig. 4: zeigt in Teilfiguren 4a und 4b eine trockenlaufende Doppelkupplung der Reibscheibenbauart mit in die Reibscheiben integrierten Torsionsschwingungsdämpfern in einem Antriebsstrang eines Kraftfahrzeugs zwischen einem Getriebe und einer Antriebseinheit.

Zur Beherrschung von Resonanzproblemen oder allgemein von hohen Beschleunigungsamplituden zwischen der Primär- und der Sekundärseite eines Torsionsschwingungsdämpfers (Zwei-Massen-Schwungrad oder konventioneller Torsionsschwingungsdämpfer, beispielsweise integriert in eine Kupplungsscheibe) wird gemäß einem herkömmlichen Ansatz eine zusätzliche Reibungseinrichtung im Torsionsschwingungsdämpfer eingesetzt. Es bietet sich an, diesen Ansatz auch bei Antriebssträngen zu verfolgen, die ein Doppelkupplungs- oder Lastschaltgetriebe besitzen, um unter Mitwirkung einer entsprechenden Mehrfach-Kupplungseinrichtung (ggf. Doppelkupplung) die Zugkraft unterbrechungsfrei auf die Antriebsräder weiterleiten zu können. Die Momentenübertragung erfolgt dabei über die betreffende Doppel-Kupplungseinrichtung mit zwei unabhängig oder abhängig, vorrangig unabhängig schaltbaren Kupplungsanordnungen, die das Moment an je einen Leistungspfad des Lastschaltgetriebes weiterleiten. Bei der Kombination eines ZMS mit einer beispielsweise trockenlaufenden Doppelkupplung, etwa der der Reibscheibenbauart, oder der Kombination einer Doppelkupplung mit einem oder mit zwei Torsionsschwingungsdämpfern auf der Abtriebsseite der Kupplung mit einem Lastschaltgetriebe, wird das Drehmoment durch die Kupplung gesteuert/geregelt durch eine vorgegebene Kuppel- und Schaltstrategie auf jeweils eine von zwei Getriebeeingangswellen weitergeleitet. Nur während eines Gangwechsels sind kurzzeitig beide Leistungspfade (Momentenübertragungswege zwischen der Antriebseinheit, insbesondere Brennkraftmaschine, und dem Getriebe) belegt, um einen zugkraftfreien Schaltvorgang zu realisieren. Das heißt, dass in der Regel ein Leistungspfad nicht belegt ist.

Im Rahmen der Erfindung liegt es, zur Beeinflussung und Beherrschung von Drehbewegungszuständen, insbesondere Schwingungszuständen, nicht auf eine herkömmliche Reibeinrichtung im Torsionsschwingungsdämpfer zu setzen, die Bauraum beansprucht, Kosten verursacht und ggf. die Funktion (Entkopplungsgüte) teilweise verschlechtert, sondern auf die bei einer Mehrfach-Kupplungsanordnung (ggf. Doppelkupplung) inherent gegebenen Möglichkeiten zur Reibungserzeugung zu setzen und gewissermaßen die "Reibungserzeugung" in den zurzeit nicht belegten Leistungspfad zu verlagern, in dem die dort vorhandene Reibungskupplung ausgenutzt wird.

Bei der Kombination eines der Kupplungseinrichtung vorgeschalteten Zwei-Massen-Schwungrads (trockenlaufend oder nasslaufend) mit einer der Kupplungseinrichtung (trockenlaufend oder nasslaufend) nachgeschaltetem Lastschaltgetriebe tritt in der Regel eine Resonanzstelle unterhalb der Leerlaufdrehzahl des Motors auf. Zur Bedämpfung dieser Resonanzstelle mittels der vorhandenen Reibungs-Kupplungsanordnungen (im Folgenden kurz "Reibungskupplungen" genannt) kann nach der Erfindung bei Start/Stop-Vorgängen vorteilhaft folgendes Verfahren angewendet werden:
In beiden Leistungspfaden wird die Neutralstellung eingestellt, wobei die Reibungskupplungen zu Beginn geöffnet sind. Abhängig von der Drehzahl oder/und abhängig von der Beschleunigungsamplitude an einer geeigneten Messstelle im Antriebsstrang werden eine oder beide Kupplungen (Kupplungsanordnungen) schlupfend geschlossen, so dass die Drehzahl der jeweiligen Getriebeeingangswelle mit dem zugehörigen, getriebeseitigen Abschnitt der Kupplungsanordnung (beispielsweise starre Kupplungsscheibe) über die Reibung an die momentane Motordrehzahl angepasst wird. Die Reibung wirkt auf die Sekundärseite des ZMS und verhindert so hohe Schwingungsamplituden. Die Größe des Reibmoments kann dabei über die Anpresskraft individuell an die auftretende Schwingung angepasst werden. Gleichzeitig wird die Eigenfrequenz des Systems durch die Resonanzankopplung des getriebeseitigen Abschnitts der Kupplungsanordnung und der Getriebeeingangswelle abgesenkt, so dass die Resonanz insbesondere beim kritischen Start schneller durchlaufen wird.
Eine speziell zur Resonanzbeherrschung eingesetzte Vorrichtung im ZMS, wie beispielsweise eine Reibeinrichtung (ggf. verschleppt) oder eine besonders niedrige Federelastizität zur Absenkung der Resonanzdrehzahl unterhalb die Zünddrehzahl des Motors, ist dann nicht erforderlich. Hierdurch werden Kosten eingespart und es kann insbesondere die Funktionsgüte des Systems durch eingesparten Bauraum und höhere Gestaltungsfreiheit bei der Federkennlinie zusätzlich verbessert werden.
Es reicht aus, nur einen Leistungspfad zur Reibungserzeugung zu nutzen. Dies ist beispielsweise dann vorteilhaft, wenn z. B. beim Startvorgang in dem Leistungspfad, wo der erste Gang geschaltet wird, der gewünschte Gang bereits eingelegt ist und die Kupplung geöffnet gehalten wird. Durch die Vorwahl des Ganges kann das Fahrzeug mit dem Schließen dieser Kupplung sofort losfahren, ohne erst einen Gang einlegen zu müssen. In diesem Fall wird die Reibungserzeugung vom jeweils anderen Leistungspfad übernommen.

Bei der Kombination einer Doppel-Kupplungseinrichtung (Doppelkupplung) mit wenigstens einem, in der Regel zwei Torsionsschwingungsdämpfern auf einer (jeweiligen) Ausgangsseite der Doppelkupplung, im Falle einer Doppelkupplung der Reibscheibenbauart beispielsweise mit in eine (jeweilige) Reibscheibe integrierten Torsionsschwingungsdämpfern, und einem nachgeschaltetem Lastschaltgetriebe liegt die Resonanzstelle in der Regel oberhalb der Leerlaufdrehzahl des Motors. Zur Bedämpfung dieser Resonanzstelle mittels der vorhandenen Reibungskupplungen können nach der Erfindung vorteilhaft beispielsweise die folgenden beiden Verfahren alternativ angewendet werden:
1. In einem Leistungspfad wird das Fahrmoment übertragen. Im anderen Leistungspfad wird die Neutralstellung eingestellt bzw. gehalten, wobei die Reibungskupplung zu Beginn geöffnet ist. Abhängig von der Drehzahl und von der momentan anliegenden Last (z. B. erfasst durch einen Drosselklappensensor) oder/und abhängig von der Drehbeschleunigungsamplitude wird die Kupplung schlupfend geschlossen, so dass die Drehzahl der in Neutralstellung geschalteten Getriebeeingangswelle mit dem zugehörigen, getriebeseitigen Abschnitt der betreffenden Kupplungsanordnung (beispielsweise Kupplungsscheibe) über die Reibung an die momentane Motordrehzahl angepasst wird. Die Reibung wirkt auf die Primärseite des.Torsionsschwingungsdämpfers im das Fahrmoment übertragenden Leistungspfad und verhindert zu hohe Schwingungsamplituden.
2. In einem Leistungspfad wird das Fahrmoment übertragen. Im anderen Leistungspfad wird ein anderer Gang, vorzugsweise ein zum Fahrgang benachbarter Gang, eingelegt, wobei die Reibungskupplung zu Beginn geöffnet ist. Abhängig von der Drehzahl und von der momentan anliegenden Last (z. B. erfasst durch einen Drosselklappensensor) oder/und abhängig von der Drehbeschleunigungsamplitude wird die zuvor geöffnete Kupplungsanordnung (Reibungskupplung) schlupfend geschlossen. An der Kupplungsanordnung (ggf. Kupplungsscheibe) entsteht eine Drehzahldifferenz, die durch die unterschiedlichen Übersetzungen der eingelegten Gänge beider Leistungspfade verursacht ist. Bevorzugt ist die Drehzahldifferenz gering, um die erzeugte Reibleistung und damit den Verschleiß gering zu halten. Die Reibung verhindert zu hohe Schwingungsamplituden und wirkt zwischen Primärseite und Sekundärseite, zwischen die der Torsionsschwingungsdämpfer bzw. beide Torsionsschwingungsdämpfer und die Getriebeeingangswellen geschaltet sind. Die Größe des Reibmoments kann über die Anpresskraft individuell auf die auftretende Schwingung oder allgemein den auftretenden Drehbewegungszustand angepasst werden.

Gemäß den Erfindungsvorschlägen kann auf eine speziell zur Resonanzbeherrschung eingesetzte Vorrichtung, wie etwa eine Reibeinrichtung (ggf. verschleppt) im Torsionsschwingungsdämpfer verzichtet werden. Damit werden Kosten eingespart und es kann insbesondere die Funktionsgüte des Systems durch eingesparten Bauraum und höhere Gestaltungsfreiheit bei der Federkennlinie zusätzlich verbessert werden.

Neben den Resonanzstellen einer oder mehrerer Torsionsschwingungsdämpferanordnung des Antriebsstrangs (etwa ZMS oder/und wenigstens eine einer Ausgangsseite der Kupplungseinrichtung zugeordnete Torsionsschwingungsdämpferanordnung, ggf. Kupplungsscheibe mit integriertem Torsionsdämpfer) können auch weitere kritische Fahrzustände, wie beispielsweise Lastwechsel, bedämpft werden, wobei es besonders zweckmäßig ist, diese Fahrzustände auf Grundlage erfasster Drehbeschleunigungen zu erkennen. Es bietet sich insbesondere die Methode mit in beiden Leistungspfaden eingelegten Gängen an, da so der Zeitaufwand für den Gangwechsel eingespart wird und das System rascher reagieren kann.

Die Erfindung bietet gemäß Vorstehendem diverse Vorteile und Potentiale, wobei insbesondere auf die Möglichkeit der Einsparung von Reibungseinrichtung in der Torsionsschwingungsdämpferanordnung zur Resonanz- bzw. Lastwechselbeherrschung, die Nutzung einer ohnehin vorhandenen Reibstelle, die Ausnutzung ohnehin vorhandener Sensoren zur Erfassung erhöhter Schwingungen, die Möglichkeit einer dem jeweiligen Zustand optimal angepassten Dämpfung und die Möglichkeit, das Reibmoment bezüglich der Schwingungsamplitude durch geregelte Anpresskraft zu optimieren, verwiesen wird.

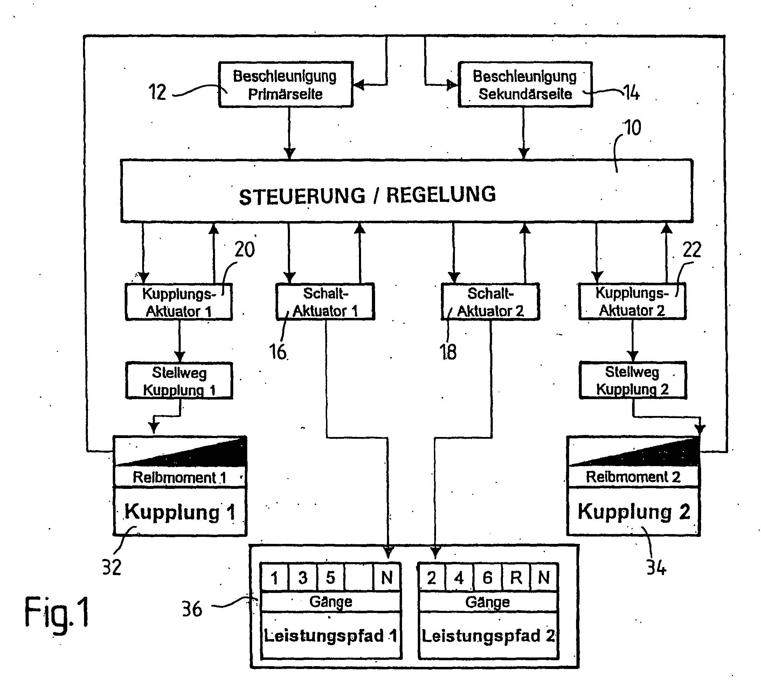

Die Erfindung wird nun im folgenden anhand der Fig. 1 bis 4 konkreter erläutert.

Fig. 1 ist ein Blockschaltbild zur Erläuterung einer bevorzugten Strategie betreffend die Beeinflussung und Beherrschung von Drehbewegungszuständen, insbesondere Schwingungszuständen, in einem Kraftfahrzeug-Antriebsstrang. Zentrales Element ist eine Steuereinheit, die eine Steuerung oder/und Regelung betreffend das Ausrücken und Einrücken und den Schlupfbetrieb der beiden Kupplungsanordnungen einer Doppelkupplung durchführt, die eine Antriebseinheit mit einem Lastschaltgetriebe verbindet. Die Steuereinheit ist mit verschiedenen Sensoren und Aktuatoren verbunden. Sensoren an der Primär- und der Sekundärseite einer Torsionsschwingungsdämpferanordnung, beispielsweise am Schwungrad bzw. an der jeweiligen Getriebeeingangswelle oder an der Getriebeausgangswelle) geben Daten an die Steuereinheit 10 weiter, aus der die Steuereinheit die Drehbeschleunigung bestimmt. Alternativ, wie in Fig. 1 dargestellt, können die betreffenden Sensoren 12 und 14 auch unmittelbar die Drehbeschleunigung bestimmen und entsprechende Daten an die Steuereinheit 10 weitergeben. Zusätzlich können weitere Sensordaten an die Steuereinheit übermittelt werden, die beispielsweise die Motordrehzahl oder/und einen Drosselklappenwinkel angeben. Die Steuereinheit 10 gibt Stellbefehle für die Schaltaktuatoren 16 und 18 der beiden Leistungspfade weiter, die im Getriebe einen jeweiligen Gang einstellen. Parallel dazu werden die Kupplungsaktuatoren 20 und 22 angesteuert, die über den Stellweg der beiden Kupplungsanordnungen (je als Kupplung 1 und Kupplung 2 bezeichnet) die benötigte Anpresskraft und damit das Reibmoment der jeweiligen Kupplung einstellen. Das eingestellte Reibmoment hat dann eine Rückwirkung auf die Beschleunigungsamplituden der Primär- und Sekundärseite, so dass an sich ein geschlossener Regelkreis realisiert ist. Es ist im Rahmen der Erfindung aber nicht zwingend, tatsächlich eine Regelung vorzusehen. Die beiden Kupplungen sind in Fig. 1 mit 32 und 34 bezeichnet, und der Block 36 repräsentiert das Lastschaltgetriebe mit einem ersten Leistungspfad, dem die Gänge 1, 3 und 5 und eine Neutralstellung zugeordnet sind, und einem zweiten Leistungspfad, dem die Gänge 2, 4, 6 und R (Rückwärtsgang) und eine Neutralstellung zugeordnet sind.

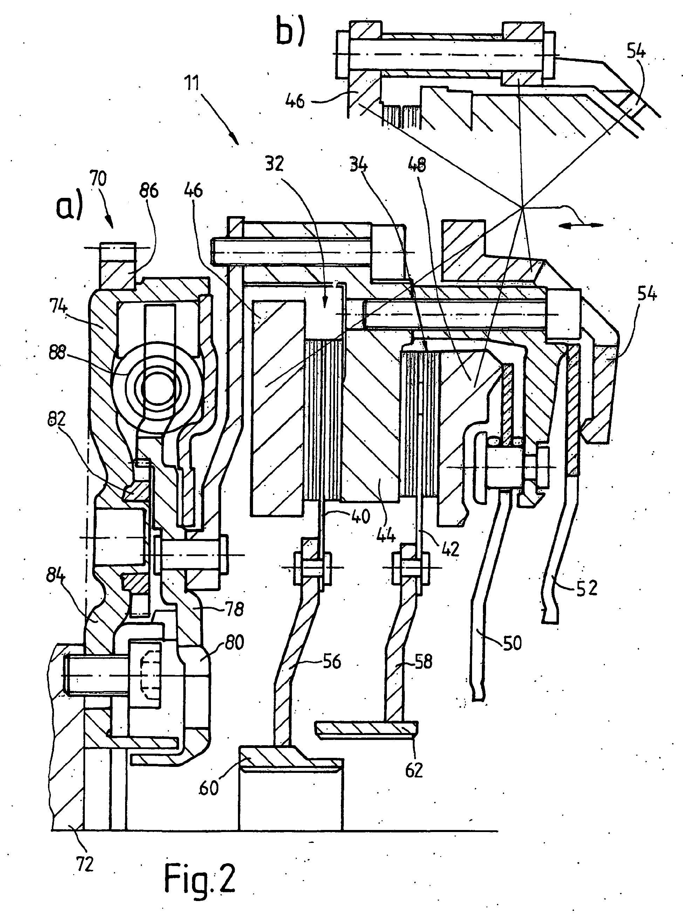

In Fig. 2 ist ein nasslaufendes Zwei-Massen-Schwungrad (ZMS) 70 in Kombination mit einer trockenlaufenden Doppelkupplung 11 dargestellt. Die Doppelkupplung weist eine erste Kupplungsanordnung 32 und eine zweite Kupplungsanordnung 34 auf, die jeweils von einer Reib- oder Kupplungsscheibe 40 bzw. 42 mit Reibbelägen auf beiden axialen Seiten gebildet ist, die jeweils zwischen der axial festen Druckplatte 44 und einer axial beweglichen Druckplatte 46 bzw. 48 einspannbar sind. Beide Kupplungsanordnungen sind als Kupplungsanordnungen des NORMALERWEISE-GESCHLOSSEN-Typs ausgeführt und werden drückend in Öffnungsrichtung betätigt. Hierbei wird die rechte Kupplungsscheibe 42 auf an sich bekannte Art und Weise über die weiter links angeordnete Membranfeder 50 betätigt, während die linke Kupplungsscheibe 40 über die weiter rechts angeordnete Membranfeder 52 betätigt wird. Die Teilfigur 2b zeigt einen Ausschnitt eines Schnitts durch einen anderen Sektor des Antriebsstrangs, und es ist die Art und Weise der Verkoppelung der beweglichen Druckplatte 46 mit einem Übertragungsteil 54 zu erkennen, auf das die Membranfeder 52 wirkt.

Die beiden Kupplungsscheiben 42 und 40 sind jeweils mit einem die eigenliche Reibscheibe haltenden Halteflansch 56 bzw. 58 ausgeführt, der eine Koppelnabe 60 bzw. 62 aufweist, über den die betreffende Reibscheibe 40 bzw. 42 mit einer jeweils zugeordneten Getriebeeingangswelle des Lastschaltgetriebes drehfest gekoppelt ist. Die der Kupplungsscheibe 42 zugeordnete Getriebeeingangswelle ist als Hohlwelle ausgeführt, durch die sich die der Kupplungsscheibe 40 zugeordnete Getriebeeingangswelle erstreckt.

Es wird noch darauf hingewiesen, dass die axial bewegbaren Komponenten der Doppelkupplung in Fig. 2 durch einen sich axial erstreckenden Doppelpfeil gekennzeichnet sind.

Der Doppelkupplung ist ein Zwei-Massen-Schwungrad (ZMS) 70 der Nasslauf-Bauart vorgeschaltet, das eine an einem Koppelende 72 einer Abtriebswelle der Antriebseinheit (ggf. einer Kurbelwelle eines Verbrennungsmotors) drehfest angekoppelte Primärseite 74 und eine mit einer gemeinsamen Eingangsseite der Doppelkupplung, die die Druckplatten 44, 46 und 48 umfasst, drehfest verbundene Ausgangsseite 78 umfasst. Im vorliegenden Fall handelt es sich bei dem Torsionsschwingungsdämpfer 70, genauer bei dem ZMS 70 um ein so genanntes Planetenrad-Zwei-Massen-Schwungrad, das ein die Ausgangsseite 78 bildendes ZMS-Hohlrad 80, ZMS-Planetenräder 82 und einen die Eingangsseite 74 bildenden Planetenradträger 84 aufweist, wobei letzterer vorliegend mit einem Anlasserzahnkranz 86 ausgeführt ist. Zwischen Eingangsseite und.Ausgangsseite ist eine Dämpferelementenanordnung 88 wirksam. Nähere Einzelheiten des Zwei-Massen-Schwungrads brauchen hier nicht erläutert werden, da es sich um eine an sich bekannte Konstruktion der Anmelderin handelt. Es wird beispielsweise auf die diesbezüglich einschlägige DE 199 58 813 A1 verwiesen.

Beim Motorstart und Motorstopp durchläuft das ZMS 70 seine Resonanzfrequenz. Zur Bedämpfung der dann erhöhten Schwingungsamplituden wird im Lastschaltgetriebe bei geöffneten Kupplungsanordnungen mindestens einer der beiden Leistungspfade auf Neutralstellung gebracht bzw. gehalten (vgl. Fig. 1). Über die Beschleunigungssensoren oder über Drehzahlsensoren können die erhöhten Schwingungsamplituden oder der kritische Drehzahlbereich erkannt werden, so dass die Steuerung/Regelung dann den Stellweg der auf Neutralstellung gebrachten Kupplungsanordnung bzw. Kupplungsanordnungen mittels des betreffenden Kupplungsaktuators so verändern kann, dass eine oder beide Kupplungsanordnungen zum Schlupfen gebracht werden. Die Kupplungsscheibe bzw. Kupplungsscheiben und die jeweilige Getriebeeingangswelle wird dann über das aufgebrachte Reibmoment mit der Motordrehzahl synchronisiert.

Das Reibmoment bremst die Sekundärseite des ZMS ab und dämpft die Schwingungsamplituden. Die das Verfahren durchführende Steuereinheit kann dabei das erzeugte Reibmoment in Abhängigkeit von der sensierten Beschleunigung regeln, und zwar derart, dass bei hohen Beschleunigungsamplituden der Stellweg der betreffenden Kupplungsanordnung - und damit das Reibmoment - erhöht und bei abnehmenden Beschleunigungsamplituden das Reibmoment reduziert wird.

Ein weiterer wichtiger Anwendungsfall ist die Beeinflussung bzw. Beherrschung von hohen Relativ-Drehbewegungsamplituden, insbesondere Drehschwingungsamplituden, im Fahrbetrieb, beispielsweise bei Lastwechseln. In diesem Fall ist ein Fahrgang in einem Leistungspfad eingelegt und die zugehörige Kupplung ist - im-Regelfall - mit maximalem Stellweg und Reibmoment geschlossen (vgl. Fig. 1). Um ohne Zeitverzug in einen benachbarten Gang schalten zu können, der dem anderen Leistungspfad zugeordnet ist, wird die andere Kupplungsanordnung in der Regel geöffnet sein und der wahrscheinlich zu schaltende Gang wird bereits eingelegt sein. Wird nun eine erhöhte Drehbeschleunigung sensiert, wird über die Kupplungsanordnung die andere, nicht dem momentanen Fahrgang zugeordnete Kupplungsanordnung zum Schlupfen gebracht. Durch die zwei eingelegten Gänge tritt dann eine Drehzahldifferenz zwischen der Sekundärseite des ZMS und der Kupplungsscheibe der anderen Kupplungsanordnung auf, und es wird auf die Sekundärseite ein dem Schlupfzustand der Kupplungsanordnung entsprechendes Reibmoment ausgeübt. Um die Leistungsverluste gering zu halten, ist es bevorzugt, die Drehzahldifferenz möglichst klein zu halten. Es ist deshalb bevorzugt, einen benachbarten Gang auf der anderen, nicht dem Fahrgang zugeordneten Getriebeeingangswelle einzulegen, wie dies auch dem normalen sequentiellen Schaltablauf des Doppelkupplungsgetriebes entspricht. Das aufgebrachte Reibmoment wirkt auf die Sekundärseite des ZMS und reduziert die Relativ-Drehbewegungsamplituden, insbesondere Drehschwingungsamplituden.

Es sollte noch darauf hingewiesen werden, dass der Erfindungsvorschlag sich nicht nur auf ein nasslaufendes ZMS, sondern auch auf ein trockenlaufendes ZMS sowie auf beliebige andere Torsionsschwingungsdämpferanordnungen bezieht. Betreffend die Kupplungsanordnungen bestehen ebenfalls keine Einschränkungen, diese können entweder vom NORMALERWEISE-OFFEN-Typ oder vom NORMALERWEISE-GESCHLOSSEN-Typ sein und es ist auch eine Kombination aus einer Kupplungsanordnung vom NORMALERWEISE-OFFEN-Typ und einer Kupplungsanordnung vom NORMALERWEISE-GESCHLOSSEN-Typ möglich. Die erforderliche Schließkraft für die Kupplungsanordnungen kann über ein separates Federelement, beispielsweise von einer Teller- oder Membranfeder, aufgebracht werden, wobei diese Feder beim Ausrückvorgang gedrückt oder gezogen betätigt werden kann. Die Betätigung für beide Kupplungsanordnungen kann von voneinander abhängigen Betätigungseinrichtungen übernommen werden, ggf. aber auch nur durch eine Betätigungseinrichtung für beide Kupplungsanordnungen.

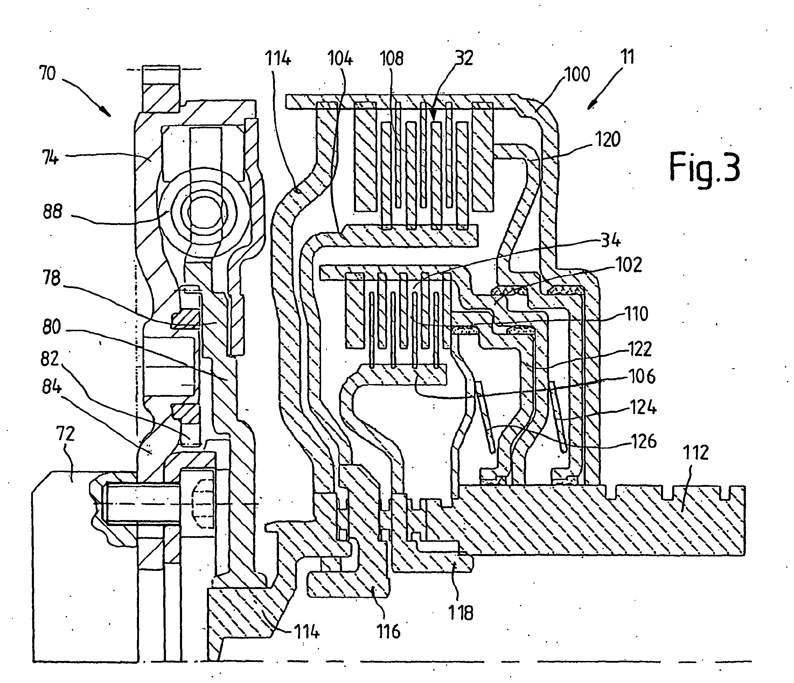

Fig. 3 zeigt ebenfalls ein Zwei-Massen-Schwungrad 70 mit nachgeschalteter Doppelkupplung 11, die vorliegend aber als nasslaufende Lamellenkupplung ausgeführt ist und eine erste Lamellen-Kupplungsanordnung 32 und eine zweite Lamellen-Kupplungsanordnung 34 aufweist. Die beiden Kupplungsanordnungen 32 und 34 weisen jeweils von einem Außenlamellenträger 100 bzw. 102 und einem Innenlamellenträger 104 bzw. 106 gehaltene Außen- und Innenlamellen auf, die ein Lamellenpaket 108 bzw. 110 bilden. Die beiden Außenlamellenträger 100 und 102 sind an einer Lagerhülse 112 drehfest angebracht, die auf einer Drehwellenanordnung umfassend zwei radial geschachtelte Getriebeeingangswellen des Lastschaltgetriebes drehbar gelagert ist. Über einen Drehmitnehmer 114 ist der Außenlamellenträger 100 und damit (über die Hülse 112) der Außenlamellenträger 102 mit einer Eingangsnabe 114 der Doppelkupplung verbunden. Die Eingangsnabe 114 steht über eine nicht dargestellte Steckverzahnung oder dergleichen mit der Sekundärseite 78 des ZMS in Drehmitnahmeverbindung. Die Eingangsnabe 114 wirkt also als eine den beiden Kupplungsanordnungen gemeinsam zugeordnete Eingangsseite der Doppelkupplung, und es können die Außenlamellenträger 100 und 102 als Eingangsseite der jeweiligen Kupplungsanordnung identifiziert werden. Die Innenlamellenträger 104 und 106 bilden die Ausgangsseite der jeweiligen Kupplungsanordnung und sind über eine Koppelnabe 116 bzw. 118 mit der jeweils zugeordneten Getriebeeingangswelle zur gemeinsamen Drehung gekoppelt. Die Betätigung der Kupplungsanordnungen erfolgt auf hydraulischem Wege mittels eines jeweiligen, in die Doppelkupplung integrierten hydraulischen Nehmerzylinders, der einen Betätigungskolben 120 bzw. 122 aufweist. Die Kupplungsanordnungen sind beide vom NORMALERWEISE-OFFEN-Typ, wo bei die Betätigungskolben durch eine jeweilige Rückstell-Federanordnung 124 bzw. 126 rückgestellt werden. Die in Fig. 3 nur teilweise dargestellte Doppelkupplung entspricht im Wesentlichen einer Konstruktion der Anmelderin, die im Detail in der deutschen Offenlegungsschrift DE 100 04 179 A1 beschrieben ist, deren Offenbarung durch Bezugnahme in den Offenbarungsgehalt der vorliegenden Anmeldung einbezogen wird.

Abgesehen davon, dass beim Ausführungsbeispiel der Fig. 3 die Reibmomenterzeugung nass und durch Lamellenpakete realisiert ist, bestehen keine grundsätzlichen Unterschiede zwischen dem Ausführungsbeispiel der Fig. 2 und dem Ausführungsbeispiel der Fig. 3, soweit es um die Anwendung der Erfindungsvorschläge geht. Es kann deshalb die im Zusammenhang mit Fig. 2 erläuterte Strategie zur Beeinflussung, insbesondere Beherrschung von Drehschwingungszuständen bzw. Relativ-Drehbewegungszuständen mit überhöhten Amplituden angewendet werden.

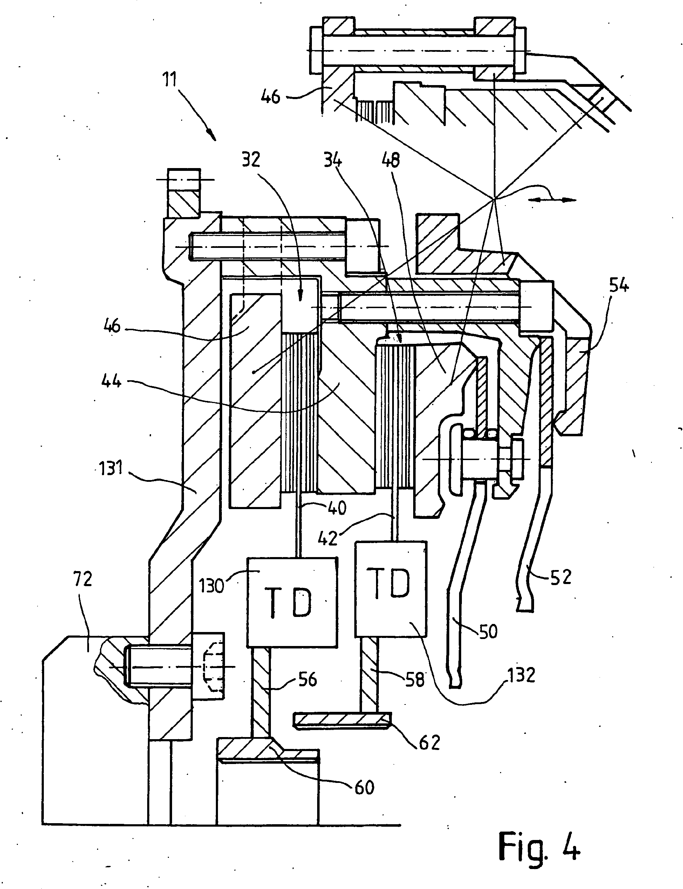

Fig. 4 zeigt einen ähnlichen Aufbau wie Fig. 2. In Fig. 4 ist allerdings kein ZMS vor die Doppelkupplung 11 geschaltet, sondern das Motormoment wird von dem Koppelende 72 über eine Mitnahmescheibe (ggf. Schwungrad) 131 direkt in die trocken ausgeführte Doppelkupplung geleitet. In die beiden Kupplungsscheiben 40 und 42 ist jeweils ein nur als Block dargestellter Torsionsschwingungsdämpfer 130 bzw. 132 integriert. Es ist also für jeden Leistungspfad ein eigener Torsionsschwingungsdämpfer vorgesehen, der herkömmlich aufgebaut sein kann wie bei herkömmlichen Kupplungsscheiben mit Torsionsschwingungsdämpfer für herkömmliche Kupplunge (Einfach-Kupplungen).

Betreffend Fig. 4 wird davon ausgegangen, dass die Kupplungsscheibe 40 der Getriebeeingangswelle zugeordnet ist, auf der der erste Gang einlegbar ist. Da der Leistungspfad mit dem ersten Gang in der Regel besonders stark belastet wird (beispielsweise durch Berg-Anfahrten, usw.), ist die Kupplungsscheibe 40 für diesen Leistungspfad etwas größer dimensioniert als die Kupplungsscheibe 42 für den anderen Leistungspfad.

Ein System wie in Fig. 4 gezeigt besitzt eine Eigenfrequenz, die in der Regel oberhalb der Leerlaufdrehzahl im Fahrbereich liegt. In diesem Resonanzbereich stellt sich in Abhängigkeit von der wirksamen Last eine erhöhte Schwingungsbelastung ein, die nach der Erfindung von hierfür vorgesehenen Sensoren (beispielsweise direkt über Beschleunigungssensoren oder über Drehzahl- und Lastsensoren) ermittelt wird. Nach einer bevorzugten Auslegung der Erfindung wird bei zu hohen Schwingungsamplituden die dem momentan nicht belasteten Leistungspfad zugehörige Kupplungsanordnung weiterhin geöffnet gehalten und ein benachbarter Gang zum im anderen, das Fahrmoment übertragenen Leistungspfad eingelegten Gang geschaltet. Danach wird die das Fahrmoment momentan nicht übertragende Kupplungsanordnung soweit geschlossen, dass ein definiertes Schlupfen auftritt und ein Reibmoment erzeugt wird, das auf die Primärseite des Torsionsschwingungsdämpfers der das Fahrmoment momentan übertragenden Kupplungsscheibe wirkt und die Schwingungen bzw. Relativ-Drehbewegungen reduziert.

Eine andere Möglichkeit ist, im das Fahrmoment momentan nicht übertragenen Leistungspfad keinen Gang einzulegen, sondern nur die beim Abbremsen bzw. Hochbeschleunigen der leer laufenden Getriebeeingangswelle samt daran angekoppelter Kupplungsscheibe auftretende Reibarbeit zur Dämpfung der Drehschwingungen bzw. Relativ-Drehbewegungen zu nutzen, wie oben erläutert wurde.

Eine Steuereinheit kann das im schlupfenden Leistungspfad erzeugte Reibmoment in Abhängigkeit von der sensierten Drehbeschleunigung regeln, so dass bei hohen Beschleunigungsamplituden der Stellweg der Kupplung - und damit das Reibmoment - erhöht und bei abnehmender Beschleunigung das Reibmoment reduziert wird.

Es sollte noch erwähnt werden, dass man vorteilhafterweise die Mitnehmerscheibe 131 zwischen Abtriebswelle der Antriebseinheit und der Doppelkupplung als Flexplatte ausbilden kann, um die axiale Schwingungsübertragung auf die Doppelkupplung zu reduzieren.

Bei der Kombination einer Doppelkupplung mit zwei Kupplungsscheiben und nachgeschaltetem Lastschaltgetriebe kann aus Bauraum- und Kostengründen ggf. auch nur eine der Kupplungsscheiben mit einem Torsionsschwingungsdämpfer ausgerüstet sein, z. B. die Kuupplungsscheibe des Leistungspfads, zu dem der erste Fahrgang gehört, wenn Getriebegeräusche in diesem Gang oder dieses Leistungspfads als besonders störend empfunden werden. Man sollte auch darauf hinweisen, dass man auch im Falle einer nasslaufenden Lamellen-Doppelkupplung, beispielsweise entsprechend Fig. 3, Torsionsschwingungsdämpfer auf den Ausgangsseiten oder einer der Ausgangsseiten der Kupplungsanordnungen vorsehen kann, die in den betreffenden Innenlamellenträger integriert sein könnten.

Zusätzlich zu wenigstens einem Torsionsschwingungsdämpfer auf der Ausgangsseite wenigstens einer der Kupplungsanordnungen kann der Doppelkupplung auch noch ein Zwei-Massen-Schwungrad vorgeschaltet sein, um eine besonders wirksame Entkopplung zu erreichen.

Bezug nehmend auf die Doppelkupplung mit den beiden Kupplungsscheiben wird ferner noch darauf hingewiesen, dass in wenigstens einer der beiden Kupplungsscheiben ein Leerlauf-Torsionsschwingungsdämpfer enthalten sein kann, ggf. zusätzlich zum darüber hinaus vorhandenen Torsionsschwingungsdämpfer für die Fahrstufe. Ein derartiger Leerlaufdämpfer dient zur Entkopplung von Getriebebauteilen, die sich gerade nicht im Momentenfluss zu den Antriebsrädern befindet. Dies ist insbesondere im Leerlaufbetrieb des Fahrzeugs von Interesse, wenn sich beide Leistungspfade im Getriebe in Neutralstellung befinden, aber wenigstens eine der beiden Kupplungen geschlossen ist. Es könnten dann Getriebebauteile, die zu diesem Leistungspfad gehören, zu Rasselgeräuschen oder dergleichen angeregt werden. Wenigstens ein Leerlaufdämpfer kann aber auch im Fahrbetrieb von Vorteil sein, wenn ein Leistungspfad im Getriebe das Antriebsmoment zu den Antriebsrädern überträgt (die zugehörige Kupplung ist dann geschlossen), die Kupplungsanordnung des anderen Leistungspfads aber ebenfalls geschlossen ist, ohne dass ein Gang auf diesem Leistungspfad eingelegt ist. Es können dann Getriebebauteile, die nicht zu diesem Pfad gehören, aber im Getriebe mitgeschleppt werden, zum Rasseln angeregt werden.

## Patentansprüche

1. Verfahren zur Beeinflussung und ggf. Beherrschung von Drehbewegungszuständen, insbesondere Schwingungszuständen, in einem Kraftfahrzeug-Antriebsstrang, der eine Antriebseinheit, ein Getriebe (36) mit wenigstens zwei Getriebeeingangswellen und eine Mehrfach-Kupplungseinrichtung, insbesondere Doppel-Kupplungseinrichtung (11), mit einer einer ersten Getriebeeingangswelle zugeordneten ersten Kupplungsanordnung (32) und einer einer zweiten Getriebeeingangswelle zugeordneten zweiten Kupplungsanordnung (34) zur Momentenübertragung zwischen der Antriebseinheit und dem Getriebe aufweist, wobei in wenigstens einem, wenigstens eine der Kupplungsanordnungen umfassenden Momentenübertragungsweg zwischen der Antriebseinheit und dem Getriebe wenigstens eine Torsionsschwingungsdämpferanordnung (70; 130, 132) enthalten ist,
**dadurch gekennzeichnet,**
**dass** unter Vermittlung wenigstens eines Sensors (12) des Antriebsstrangs eine einer Eingangsseite der Torsionsschwingungsdämpferanordnung (70; 130 bzw. 132) zugeordnete momentane Drehzahl oder/und eine der Eingangsseite der Torsionsschwingungsdämpferanordnung zugeordnete momentane Drehbeschleunigung erfasst wird und dass in Abhängigkeit von der erfassten Drehzahl oder/und Drehbeschleunigung die Schlupf-Kupplungsanordnung bzw. Schlupf-Kupplungsanordnungen in den Schlupfzustand gebracht wird/werden, wobei der auftretende Schlupf in Abhängigkeit von an der Torsionsschwingungsdämpferanordnung (70; 130 bzw. 132) auftretenden Relativ-Drehamplituden oder/und Drehbeschleunigungen gesteuert oder geregelt wird, um die Relative-Drehamplituden oder/und Drehbeschleunigen zu reduzieren.

2. Verfahren zur Beeinflussung und ggf. Beherrschung von Drehbewegungszuständen, insbesondere Schwingungszuständen, in einem Kraftfahrzeug-Antriebsstrang, der eine Antriebseinheit, ein Getriebe (36) mit wenigstens zwei Getriebeeingangswellen und eine Mehrfach-Kupplungseinrichtung, insbesondere Doppel-Kupplungseinrichtung (11), mit einer einer ersten Getriebeeingangswelle zugeordneten ersten Kupplungsanordnung (32) und einer einer zweiten Getriebeeingangswelle zugeordneten zweiten Kupplungsanordnung (34) zur Momentenübertragung zwischen der Antriebseinheit und dem Getriebe aufweist, wobei in wenigstens einem, wenigstens eine der Kupplungsanordnungen umfassenden Momentenübertragungsweg zwischen der Antriebseinheit und dem Getriebe wenigstens eine Torsionsschwingungsdämpferanordnung (70; 130, 132) enthalten ist,
**dadurch gekennzeichnet,**
**dass** unter Vermittlung wenigstens eines Sensors (14) des Antriebsstrangs eine einer Ausgangsseite der Torsionsschwingungsdämpferanordnung (70; 130 bzw. 132) zugeordnete momentane Drehzahl oder/und eine der Ausgangsseite der Torsionsschwingungsdämpferanordnung zugeordnete momentane Drehbeschleunigung erfasst wird und dass in Abhängigkeit von der erfassten Drehzahl oder/und Drehbeschleunigung die Schlupf-Kupplungsanordnung bzw. Schlupf-Kupplungsanordnungen in den Schlupfzustand gebracht wird/werden, wobei der auftretende Schlupf in Abhängigkeit von an der Torsionsschwingungsdämpferanordnung (70; 130 bzw. 132) auftretenden Relativ-Drehamplituden oder/und Drehbeschleunigungen gesteuert oder geregelt wird, um die Relative-Drehamplituden oder/und Drehbeschleunigen zu reduzieren.

3. Verfahren nach Anspruch 1 oder 2, **dadurch gekennzeichnet, dass** beim Starten oder/und beim Stoppen der Antriebseinheit zur Bedämpfung einer Drehschwingungsresonanz bei einer Drehzahl, die unter einer Leerlaufdrehzahl der Antriebseinheit liegt, das Getriebe (36) für beide Getriebeeingangswellen in einen Neutralzustand gebracht bzw. in diesem gehalten wird und wenigstens eine der Kupplungsanordnungen (32, 34) von einem ausgekuppelten Zustand in einen Schlupfzustand gebracht wird, um vermittels der an der Kupplungsanordnung bzw. den Kupplungsanordnungen (im Folgenden als Schlupf-Kupplungsanordnung bzw. Schlupf-Kupplungsanordnungen bezeichnet) auftretenden Reibung die Drehschwingungsresonanz zu dämpfen.

4. Verfahren nach einem der Ansprüche 1 bis 3, **dadurch gekennzeichnet, dass** im Fahrbetrieb zur Bedämpfung einer Drehschwingungsresonanz bei einer Drehzahl, die über einer Leerlaufdrehzahl der Antriebseinheit liegt, eine momentan kein Fahrmoment übertragende Kupplungsanordnung (32 bzw. 34) von einem ausgekuppelten Zustand in einen Schlupfzustand gebracht wird, um vermittels der an dieser Kupplungsanordnung (im Folgenden als Schlupf-Kupplungsanordnung bezeichnet) auftretenden Reibung die Drehschwingungsresonanz zu dämpfen.

5. Verfahren nach einem der Ansprüche 1 bis 4, **dadurch gekennzeichnet, dass** im Fahrbetrieb zur Beeinflussung, ggf. Beherrschung, eines kritischen Fahrzustands, bei dem im Antriebsstrang relative Drehbewegungen, ggf. Drehschwingungen, auftreten, eine momentan kein Fahrmoment übertragende Kupplungsanordnung (32 bzw. 34) von einem ausgekuppelten Zustand in einen Schlupfzustand gebracht wird, um vermittels der an dieser Kupplungsanordnung (im Folgenden als Schlupf-Kupplungsanordnung bezeichnet) auftretenden Reibung auftretende Drehbewegungsamplituden, ggf. Drehschwingungsamplituden, zu reduzieren bzw. zu dämpfen.

6. Verfahren nach Anspruch 5, **dadurch gekennzeichnet, dass** der kritische Fahrzustand ein Zustand ist, der in Reaktion auf wenigstens einen Lastwechsel auftritt.

7. Verfahren nach einem der Ansprüche 4 bis 6, **dadurch gekennzeichnet, dass** das Getriebe für die der Schlupf-Kupplungsanordnung (32 bzw. 34) zugeordnete Getriebeeingangswelle vor der Einstellung des Schlupfzustand in einen Neutralzustand gebracht wird bzw. dass das Getriebe während der Einstellung des Schlupfzustands im Neutralzustand gehalten wird.

8. Verfahren nach Anspruch 4 bis 6, **dadurch gekennzeichnet, dass** das Getriebe für die der Schlupf-Kupplungsanordnung (32 bzw. 34) zugeordnete Getriebeeingangswelle vor der Einstellung des Schlupfzustand in einen Zustand gebracht wird, bei dem auf dieser Getriebeeingangswelle ein Gang eingelegt ist, bzw. dass das Getriebe während der Einstellung des Schlupfzustands in einem solchen Zustand gehalten wird.

9. Verfahren nach Anspruch 8, **dadurch gekennzeichnet, dass** auf der Getriebeeingangswelle ein Gang eingelegt wird oder ist, der zu einem Fahrgang auf der der anderen Kupplungsanordnung zugeordneten Getriebeeingangswelle benachbart ist.

10. Verfahren nach Anspruch 1 oder einem der Ansprüche 3 bis 9, **dadurch gekennzeichnet, dass** unter Vermittlung wenigstens eines Sensors (14) des Antriebsstrangs eine einer Ausgangsseite der Torsionsschwingungsdämpferanordnung (70; 130 bzw. 132) zugeordnete momentane Drehzahl oder/und eine der Ausgangsseite der Torsionsschwingungsdämpferanordnung zugeordnete momentane Drehbeschleunigung erfasst wird und dass in Abhängigkeit von der erfassten Drehzahl oder/und Drehbeschleunigung die Schlupf-Kupplungsanordnung bzw. Schlupf-Kupplungsanordnungen in den Schlupfzustand gebracht wird/werden.

11. Verfahren nach einem der Ansprüche 1 oder 2 oder nach Anspruch 10, **dadurch gekennzeichnet, dass** die Schlupf-Kupplungsanordnung (32 bzw. 34) bzw. Schlupf-Kupplungsanordnungen (32, 34) in Abhängigkeit von einem momentan wirksamen Antriebsmoment der Antriebseinheit in den Schlupfzustand gebracht wird/werden.

12. Verfahren nach einem der Ansprüche 1 oder 2 oder einem der Ansprüche 10 oder 11, **dadurch gekennzeichnet, dass** die Schlupf-Kupplungsanordnung (32 bzw. 34) bzw. Schlupf-Kupplungsanordnungen (32, 34) in den Schlupfzustand gebracht wird/werden, wenn die erfasste Drehzahl gemäß einem vorgegebenen Übereinstimmungskriterium einem kritischen Drehzahlwert oder Drehzahlbereich entspricht.

13. Verfahren nach Anspruch 12, **dadurch gekennzeichnet, dass** die Schlupf-Kupplungsanordnung (32 bzw. 34) bzw. Schlupf-Kupplungsanordnungen (32, 34) zur Beendigung des Schlupfzustands ausgekuppelt wird/werden, wenn die erfasste Drehzahl gemäß dem/einem vorgegebenen Übereinstimmungskriterium dem kritischen Drehzahlwert oder Drehzahlbereich nicht mehr entspricht.

14. Verfahren nach einem der Ansprüche 1 oder 2 oder einem der Ansprüche 10 bis 13, **dadurch gekennzeichnet, dass** die Schlupf-Kupplungsanordnung (32 bzw. 34) bzw. Schlupf-Kupplungsanordnungen (32, 34) in den Schlupfzustand gebracht wird/werden, wenn die erfasste Drehbeschleunigung einen vorgegebenen Drehbeschleunigungswert annimmt oder diesen übersteigt.

15. Verfahren nach Anspruch 14, **dadurch gekennzeichnet, dass** die Schlupf-Kupplungsanordnung (32 bzw. 34) bzw. Schlupf-Kupplungsanordnungen (32, 34) zur Beendigung des Schlupfzustands ausgekuppelt wird/werden, wenn die erfasste Drehbeschleunigung unter den/einen vorgegebenen Drehbeschleunigungswert abfällt.

16. Verfahren nach einem der Ansprüche 1 oder 2 oder einem der Ansprüche 10 bis 15, **dadurch gekennzeichnet, dass** die Schlupf-Kupplungsanordnung (32 bzw. 34) bzw. Schlupf-Kupplungsanordnungen (32, 34) zur Beendigung des Schlupfzustands ausgekuppelt wird/werden, wenn die zugehörige Getriebeeingangswelle, auf der kein Gang eingelegt ist, eine momentane Drehzahl der Antriebseinheit gemäß einem vorgegebenen Übereinstimmungskriterium erreicht hat.

17. Verfahren nach einem der Ansprüche 1 bis 16, **dadurch gekennzeichnet, dass** die Torsionsschwingungsdämpferanordnung (70) im Antriebsstrang eine Ausgangsseite (72) der Antriebseinheit mit einer den Kupplungsanordnungen (32, 34) gemeinsamen Eingangsseite (44, 46, 48; 114) der Kupplungseinrichtung (11) verbindet.

18. Verfahren nach Anspruch 17, **dadurch gekennzeichnet, dass** die Torsionsschwingungsdämpferanordnung als Zwei-Massen-Schwungrad (70) ausgeführt ist.

19. Verfahren nach einem der Ansprüche 1 bis 18, **gekennzeichnet durch** wenigstens eine einer Ausgangsseite (40 bzw. 42) einer der Kupplungsanordnungen (32, 34) zugeordnete, ggf. in eine ausgangsseitige Komponente (40 bzw. 42) der Kupplungsanordnung integrierte Torsionsschwingungsdämpferanordnung (130, 132).

20. Verfahren nach Anspruch 19, **dadurch gekennzeichnet, dass** die Torsionsschwingungsdämpferanordnung einer Kupplungsscheibe (40 bzw. 42) zugeordnet, ggf. darin integriert ist.

21. Kraftfahrzeug-Antriebsstrang, der eine Antriebseinheit, ein Getriebe (36) mit wenigstens zwei Getriebeeingangswellen und eine Mehrfach-Kupplungseinrichtung, insbesondere Doppel-Kupplungseinrichtung (11), mit einer einer ersten Getriebeeingangswelle zugeordneten ersten Kupplungsanordnung (32) und einer einer zweiten Getriebeeingangswelle zugeordneten zweiten Kupplungsanordnung (34) zur Momentenübertragung zwischen der Antriebseinheit und dem Getriebe aufweist, wobei in wenigstens einem, wenigstens eine der Kupplungsanordnungen umfassenden Momentenübertragungsweg zwischen der Antriebseinheit und dem Getriebe wenigstens eine Torsionsschwingungsdämpferanordnung (70; 130, 132) enthalten ist,
**gekennzeichnet durch** eine elektronische Steuereinheit (10), die dafür ausgelegt oder/und programmiert ist, zur Beeinflussung und ggf. Beherrschung von Drehbewegungszuständen, insbesondere Schwingungszuständen, des Antriebsstrangs die Kupplungseinrichtung (11) und ggf. das Getriebe (36) unter Vermittlung einer der Kupplungseinrichtung und ggf. dem Getriebe zugeordneten Aktuatoranordnung (16, 18, 20, 22) gemäß dem Verfahren nach wenigstens einem der vorhergehenden Ansprüchen zu betreiben.

22. Antriebsstrang nach Anspruch 21, **dadurch gekennzeichnet, dass** die Torsionsschwingungsdämpferanordnung (70) im Antriebsstrang eine Ausgangsseite (72) der Antriebseinheit mit einer den Kupplungsanordnungen (32, 34) gemeinsamen Eingangsseite (44, 46, 48; 114) der Kupplungseinrichtung verbindet.

23. Antriebsstrang nach Anspruch 22, **dadurch gekennzeichnet, dass** die Torsionsschwingungsdämpferanordnung als Zwei-Massen-Schwungrad (70) ausgeführt ist.

24. Antriebsstrang nach einem der Ansprüche 21 bis 23, **gekennzeichnet durch** wenigstens eine einer Ausgangsseite (40 bzw. 42) einer der Kupplungsanordnungen (32, 34) zugeordnete, ggf. in eine ausgangsseitige Komponente (40 bzw. 42) der Kupplungsanordnung integrierte Torsionsschwingungsdämpferanordnung (130, 132).

25. Antriebsstrang nach Anspruch 24, **dadurch gekennzeichnet, dass** die Torsionsschwingungsdämpferanordnung einer Kupplungsscheibe (40 bzw. 42) zugeordnet, ggf. darin integriert ist.

## Claims

1. Method for influencing and optionally controlling rotational motion states, in particular vibration states, in a motor-vehicle drive train which has a drive unit, a transmission (36) having at least two transmission input shafts, and a multiple clutch device, in particular a dual clutch device (11), having a first clutch arrangement (32) which is assigned to a first transmission input shaft and a second clutch arrangement (34) which is assigned to a second transmission input shaft for the transmission of torque between the drive unit and the transmission, at least one torsional-vibration damper arrangement (70; 130, 132) being contained in at least one torque-transmission path which comprises at least one of the clutch arrangements between the drive unit and the transmission, **characterized in that**, via at least one sensor (12) of the drive train, an instantaneous rotational speed which is assigned to an input side of the torsional-vibration damper arrangement (70; 130 or 132) and/or an instantaneous rotary acceleration which is assigned to the input side of the torsional-vibration damper arrangement are/is detected, and **in that** the slip clutch arrangement or slip clutch arrangements is/are transferred into the slip state as a function of the detected rotational speed and/or rotary acceleration, the slip which occurs being controlled or regulated as a function of rotary accelerations and/or relative rotary amplitudes which occur at the torsional-vibration damper arrangement (70; 130 or 132), in order to reduce the relative rotary amplitudes and/or rotary accelerations.

2. Method for influencing and optionally controlling rotational motion states, in particular vibration states, in a motor-vehicle drive train which has a drive unit, a transmission (36) having at least two transmission input shafts, and a multiple clutch device, in particular a dual clutch device (11), having a first clutch arrangement (32) which is assigned to a first transmission input shaft and a second clutch arrangement (34) which is assigned to a second transmission input shaft for the transmission of torque between the drive unit and the transmission, at least one torsional-vibration damper arrangement (70; 130, 132) being contained in at least one torque-transmission path which comprises at least one of the clutch arrangements between the drive unit and the transmission, **characterized in that**, via at least one sensor (14) of the drive train, an instantaneous rotational speed which is assigned to an output side of the torsional-vibration damper arrangement (70; 130 or 132) and/or an instantaneous rotary acceleration which is assigned to the output side of the torsional-vibration damper arrangement are/is detected, and **in that** the slip clutch arrangement or slip clutch arrangements is/are transferred into the slip state as a function of the detected rotational speed and/or rotary acceleration, the slip which occurs being controlled or regulated as a function of rotary accelerations and/or relative rotary amplitudes which occur at the torsional-vibration damper arrangement (70; 130 or 132), in order to reduce the relative rotary amplitudes and/or rotary accelerations.

3. Method according to Claim 1 or 2, **characterized in that**, during starting and/or during stopping of the drive unit for damping a rotary-vibration resonance at a rotational speed which lies below an idling rotational speed of the drive unit, the transmission (36) is transferred into a neutral state for both transmission input shafts or is held in the said neutral state and at least one of the clutch arrangements (32, 34) is transferred from a disengaged state into a slip state, in order to damp the rotary-vibration resonance via the friction which occurs at the clutch arrangement or clutch arrangements (called slip clutch arrangement or slip clutch arrangements in the following text).

4. Method according to one of Claims 1 to 3, **characterized in that**, during driving operation for damping a rotary-vibration resonance at a rotational speed which lies above an idling rotational speed of the drive unit, a clutch arrangement (32 or 34) which is not transmitting any drive torque instantaneously is transferred from a disengaged state into a slip state, in order to damp the rotary-vibration resonance via the friction which occurs at the said clutch arrangement (called slip clutch arrangement in the following text).

5. Method according to one of Claims 1 to 4, **characterized in that**, during driving operation for influencing or possibly controlling a critical driving state, in which relative rotary movements or possibly rotary vibrations occur in the drive train, a clutch arrangement (32 or 34) which is not transmitting any drive torque instantaneously is transferred from a disengaged state into a slip state, in order to damp rotary-movement amplitudes or possibly rotary-vibration amplitudes which occur via the friction which occurs at the said clutch arrangement (called slip clutch arrangement in the following text).

6. Method according to Claim 5, **characterized in that** the critical driving state is a state which occurs in reaction to at least one load change.

7. Method according to one of Claims 4 to 6, **characterized in that**, before the slip state is set, the transmission for the transmission input shaft which is assigned to the slip clutch arrangement (32 or 34) is transferred into a neutral state, or **in that** the transmission is held in the neutral state during the setting of the slip state.

8. Method according to Claims 4 to 6, **characterized in that**, before the slip state is set, the transmission for the transmission input shaft which is assigned to the slip clutch arrangement (32 or 34) is transferred into a state, in which a gear is selected on this transmission input shaft, or **in that** the transmission is held in a state of this type during the setting of the slip state.

9. Method according to Claim 8, **characterized in that** a gear is selected on the transmission input shaft, which gear is adjacent to a driving gear on the transmission input shaft which is assigned to the other clutch arrangement.

10. Method according to Claim 1 or one of Claims 3 to 9, **characterized in that**, via at least one sensor (14) of the drive train, an instantaneous rotational speed which is assigned to an output side of the torsional-vibration damper arrangement (70; 130 or 132) and/or an instantaneous rotary acceleration which is assigned to the output side of the torsional-vibration damper arrangement are/is detected, and **in that** the slip clutch arrangement or slip clutch arrangements is/are transferred into the slip state as a function of the detected rotational speed and/or rotary acceleration.

11. Method according to either of Claims 1 and 2 or according to Claim 10, **characterized in that** the slip clutch arrangement (32 or 34) or slip clutch arrangements (32, 34) is/are transferred into the slip state as a function of an instantaneously acting drive torque of the drive unit.

12. Method according to either of Claims 1 and 2 or either of Claims 10 and 11, **characterized in that** the slip clutch arrangement (32 or 34) or slip clutch arrangements (32, 34) is/are transferred into the slip state when the detected rotational speed corresponds to a critical rotational-speed value or rotational-speed range in accordance with a predefined correspondence criterion.

13. Method according to Claim 12, **characterized in that** the slip clutch arrangement (32 or 34) or slip clutch arrangements (32, 34) is/are disengaged to end the slip state when the detected rotational speed no longer corresponds to the critical rotational-speed value or rotational-speed range in accordance with the/a predefined correspondence criterion.

14. Method according to either of Claims 1 and 2 or one of Claims 10 to 13, **characterized in that** the slip clutch arrangement (32 or 34) or slip clutch arrangements (32, 34) is/are transferred into the slip state when the detected rotary acceleration assumes a predefined rotary-acceleration value or exceeds the latter.

15. Method according to Claim 14, **characterized in that** the slip clutch arrangement (32 or 34) or slip clutch arrangements (32, 34) is/are disengaged to end the slip state when the detected rotary acceleration falls below the/a predefined rotary-acceleration value.

16. Method according to either of Claims 1 and 2 or one of Claims 10 to 15, **characterized in that** the slip clutch arrangement (32 or 34) or slip clutch arrangements (32, 34) is/are disengaged to end the slip state when the associated transmission input shaft, on which no gear is selected, has reached an instantaneous rotational speed of the drive unit in accordance with a predefined correspondence criterion.

17. Method according to one of Claims 1 to 16, **characterized in that**, in the drive train, the torsional-vibration damper arrangement (70) connects an output side (72) of the drive unit to an input side (44, 46, 48; 114) of the clutch device (11), which input side (44, 46, 48; 114) is common to the clutch arrangements (32, 34).

18. Method according to Claim 17, **characterized in that** the torsional-vibration damper arrangement is configured as a two-mass flywheel (70).

19. Method according to one of Claims 1 to 18, **characterized by** at least one torsional-vibration damper arrangement (130, 132) which is assigned to an output side (40 or 42) of one of the clutch arrangements (32, 34) and is possibly integrated into an output-side component (40 or 42) of the clutch arrangement.

20. Method according to Claim 19, **characterized in that** the torsional-vibration damper arrangement is assigned to a clutch plate (40 or 42) or is possibly integrated into it.

21. Motor-vehicle drive train which has a drive unit, a transmission (36) having at least two transmission input shafts, and a multiple clutch device, in particular a dual clutch device (11), having a first clutch arrangement (32) which is assigned to a first transmission input shaft and a second clutch arrangement (34) which is assigned to a second transmission input shaft for the transmission of torque between the drive unit and the transmission, at least one torsional-vibration damper arrangement (70; 130, 132) being contained in at least one torque-transmission path which comprises at least one of the clutch arrangements between the drive unit and the transmission, **characterized by** an electronic control unit (10) which is designed and/or programmed for the purpose of operating the clutch device (11) and possibly the transmission (36) according to the method according to at least one of the preceding claims, via an actuator arrangement (16, 18, 20, 22) which is assigned to the clutch device and possibly the transmission, in order to influence and possibly control rotary-movement states, in particular vibration states, of the drive train.

22. Drive train according to Claim 21, **characterized in that**, in the drive train, the torsional-vibration damper arrangement (70) connects an output side (72) of the drive unit to an input side (44, 46, 48; 114) of the clutch device, which input side (44, 46, 48; 114) is common to the clutch arrangements (32, 34).

23. Drive train according to Claim 22, **characterized in that** the torsional-vibration damper arrangement is configured as a two-mass flywheel (70).

24. Drive train according to one of Claims 21 to 23, **characterized by** at least one torsional-vibration damper arrangement (130, 132) which is assigned to an output side (40 or 42) of one of the clutch arrangements (32, 34) and is possibly integrated into an output-side component (40 or 42) of the clutch arrangement.

25. Drive train according to Claim 24, **characterized in that** the torsional-vibration damper arrangement is assigned to a clutch plate (40 or 42) or is possibly integrated into it.

## Revendications

1. Procédé pour influencer et éventuellement maîtriser des états de mouvements de rotation, notamment des états d'oscillation, dans une chaîne d'entraînement de véhicule automobile, qui présente une unité d'entraînement, une boîte de vitesses (36) avec au moins deux arbres d'entrée de boîte de vitesses et un dispositif d'embrayage multiple, notamment un dispositif de double embrayage (11), comprenant un premier agencement d'embrayage (32) associé à un premier arbre d'entrée de boîte de vitesses et un deuxième agencement d'embrayage (34) associé à un deuxième arbre d'entrée de boîte de vitesses pour le transfert de couple entre l'unité d'entraînement et la boîte de vitesses, au moins un agencement d'amortisseur d'oscillations de torsion (70 ; 130, 132) étant inclus dans au moins une voie de transfert de couple comprenant au moins l'un des agencements d'embrayages entre l'unité d'entraînement et la boîte de vitesses,
**caractérisé en ce que**
par l'intermédiaire d'au moins un capteur (12) de la chaîne d'entraînement, on détecte un régime momentané associé à un côté d'entrée de l'agencement d'amortisseur d'oscillations de torsion (70 ; 130 ou 132) et/ou une accélération de rotation momentanée associée au côté d'entrée de l'agencement d'amortisseur d'oscillations de torsion, et **en ce qu'**en fonction du régime et/ou de l'accélération de rotation détectés, on amène l'agencement d'embrayage glissant ou les agencements d'embrayages glissants dans l'état de glissement, le glissement produit étant commandé ou régulé en fonction d'amplitudes de rotation relatives et/ou d'accélérations de rotation produites au niveau de l'agencement d'amortisseur d'oscillations de torsion (70 ; 130 ou 132), afin de réduire les amplitudes de rotation relatives et/ou les accélérations de rotation.

2. Procédé pour influencer et éventuellement maîtriser des états de mouvements de rotation, notamment des états d'oscillation, dans une chaîne d'entraînement de véhicule automobile, qui présente une unité d'entraînement, une boîte de vitesses (36) avec au moins deux arbres d'entrée de boîte de vitesses et un dispositif d'embrayage multiple, notamment un dispositif de double embrayage (11), comprenant un premier agencement d'embrayage (32) associé à un premier arbre d'entrée de boîte de vitesses et un deuxième agencement d'embrayage (34) associé à un deuxième arbre d'entrée de boîte de vitesses pour le transfert de couple entre l'unité d'entraînement et la boîte de vitesses, au moins un agencement d'amortisseur d'oscillations de torsion (70 ; 130, 132) étant inclus dans au moins une voie de transfert de couple comprenant au moins l'un des agencements d'embrayages entre l'unité d'entraînement et la boîte de vitesses,
**caractérisé en ce que**
par l'intermédiaire d'au moins un capteur (14) de la chaîne d'entraînement, on détecte un régime momentané associé à un côté de sortie de l'agencement d'amortisseur d'oscillations de torsion (70 ; 130 ou 132) et/ou une accélération de rotation momentanée associée au côté de sortie de l'agencement d'amortisseur d'oscillations de torsion, et **en ce qu'**en fonction du régime et/ou de l'accélération de rotation détectés, on amène l'agencement d'embrayage glissant ou les agencements d'embrayages glissants dans l'état de glissement, le glissement produit étant commandé ou régulé en fonction d'amplitudes de rotation relatives et/ou d'accélérations de rotation produites au niveau de l'agencement d'amortisseur d'oscillations de torsion (70 ; 130 ou 132), afin de réduire les amplitudes de rotation relatives et/ou les accélérations de rotation.

3. Procédé selon la revendication 1 ou 2, **caractérisé en ce qu'**au démarrage et/ou à l'arrêt de l'unité d'entraînement, pour l'amortissement d'une résonance d'oscillation de rotation à un régime qui se trouve sous un régime de marche à vide de l'unité d'entraînement, la boîte de vitesses (36) pour les deux arbres d'entrée de boîte de vitesses est amenée dans un état neutre ou y est maintenue et au moins l'un des agencements d'embrayages (32, 34) est amené d'un état débrayé dans un état de glissement afin d'amortir la résonance d'oscillation de rotation au moyen du frottement produit au niveau de l'agencement d'embrayage ou des agencements d'embrayages (ci-dessous appelés agencement d'embrayage glissant ou agencements d'embrayages glissants).

4. Procédé selon l'une quelconque des revendications 1 à 3, **caractérisé en ce que** dans le mode de conduite, pour amortir une résonance d'oscillation de rotation à un régime qui est au-dessus d'un régime de marche à vide de l'unité d'entraînement, on amène un agencement d'embrayage (32 ou 34) ne transmettant momentanément aucun couple de conduite, d'un état débrayé dans un état de glissement, afin d'amortir la résonance d'oscillation de rotation au moyen du frottement produit au niveau de cet agencement d'embrayage (ci-après appelé agencement d'embrayage glissant).

5. Procédé selon l'une quelconque des revendications 1 à 4, **caractérisé en ce que** dans le mode de conduite pour influencer et éventuellement maîtriser un état de conduite critique dans lequel il se produit dans la chaîne d'entraînement des mouvements de rotation relatifs, éventuellement des oscillations de rotation on amène un agencement d'embrayage (32 ou 34) ne transmettant momentanément aucun couple de conduite, d'un état débrayé dans un état de glissement, afin de réduire ou d'amortir les amplitudes de mouvements de rotation, éventuellement les amplitudes d'oscillations de rotation produites, au moyen du frottement produit au niveau de cet agencement d'embrayage (ci-dessous appelé agencement d'embrayage glissant).

6. Procédé selon la revendication 5, **caractérisé en ce que** l'état de conduite critique est un état qui se produit en réaction à au moins un changement de charge.

7. Procédé selon l'une quelconque des revendications 4 à 6, **caractérisé en ce que** la boîte de vitesses pour l'arbre d'entrée de boîte de vitesses associé à l'agencement d'embrayage glissant (32 ou 34) est amenée dans un état neutre avant l'ajustement de l'état de glissement, ou **en ce que** la boîte de vitesses est maintenue dans l'état neutre pendant l'ajustement de l'état de glissement.

8. Procédé selon les revendications 4 à 6, **caractérisé en ce que** la boîte de vitesses pour l'arbre d'entrée de boîte de vitesses associé à l'agencement d'embrayage glissant (32 ou 34) est amenée avant l'ajustement de l'état de glissement dans un état auquel un rapport de vitesse est enclenché sur cet arbre d'entrée de boîte de vitesses, ou **en ce que** la boîte de vitesses est maintenue dans un tel état pendant l'ajustement de l'état de glissement.

9. Procédé selon la revendication 8, **caractérisé en ce que** l'on enclenche un rapport de vitesse sur l'arbre d'entrée de boîte de vitesses, lequel est adjacent à un rapport de vitesse de conduite sur l'arbre d'entrée de boîte de vitesses associé à l'autre agencement d'embrayage.

10. Procédé selon la revendication 1 ou l'une quelconque des revendications 3 à 9, **caractérisé en ce que**, par l'intermédiaire d'au moins un capteur (14) de la chaîne d'entraînement, l'on détecte un régime momentané associé à un côté de sortie de l'agencement d'amortisseur d'oscillations de torsion (70 ; 130 ou 132) et/ou une accélération de rotation momentanée associée au côté de sortie de l'agencement d'amortisseur d'oscillations de torsion et **en ce qu'**en fonction du régime et/ou de l'accélération de rotation détectés, on amène l'agencement d'embrayage glissant ou les agencements d'embrayages glissants dans l'état de glissement.

11. Procédé selon l'une quelconque des revendications 1 ou 2 selon la revendication 10, **caractérisé en ce que** l'agencement d'embrayage glissant (32 ou 34) ou les agencements d'embrayages glissants (32, 34) sont amenés dans l'état de glissement en fonction d'un couple d'entraînement momentanément actif de l'unité d'entraînement.

12. Procédé selon l'une quelconque des revendications 1 ou 2 ou selon l'une quelconque des revendications 10 ou 11, **caractérisé en ce que** l'agencement d'embrayage glissant (32 ou 34) ou les agencements d'embrayages glissants (32, 34) sont amenés dans l'état de glissement lorsque le régime détecté correspond à une valeur de régime critique ou une plage de régime critique selon un critère de coïncidence prédéfini.

13. Procédé selon la revendication 12, **caractérisé en ce que** l'agencement d'embrayage glissant (32 ou 34) ou les agencements d'embrayages glissants (32, 34) sont débrayés pour terminer l'état de glissement, lorsque le régime détecté ne correspond plus à la valeur de régime critique ou à la plage de régime critique selon le ou un critère de coïncidence prédéfini.

14. Procédé selon l'une quelconque des revendications 1 ou 2 ou selon l'une quelconque des revendications 10 à 13, **caractérisé en ce que** l'agencement d'embrayage glissant (32 ou 34) ou les agencements d'embrayages glissants (32, 34) sont amenés dans l'état de glissement lorsque l'accélération de rotation détectée prend une valeur d'accélération de rotation prédéfinie ou la dépasse.

15. Procédé selon la revendication 14, **caractérisé en ce que** l'agencement d'embrayage glissant (32 ou 34) ou les agencements d'embrayages glissants (32, 34) sont débrayés pour terminer l'état de glissement lorsque l'accélération de rotation détectée tombe en dessous de la ou d'une valeur d'accélération de rotation prédéfinie.

16. Procédé selon l'une quelconque des revendications 1 ou 2, ou selon l'une quelconque des revendications 10 à 15, **caractérisé en ce que** l'agencement d'embrayage glissant (32 ou 34) ou les agencements d'embrayages glissants (32, 34) sont débrayés pour terminer l'état de glissement lorsque l'arbre d'entrée de boîte de vitesses associé, sur lequel aucun rapport de vitesse n'est enclenché, a atteint un régime momentané de l'unité d'entraînement selon un critère de coïncidence prédéfini.

17. Procédé selon l'une quelconque des revendications 1 à 16, **caractérisé en ce que** l'agencement d'amortisseur d'oscillations de torsion (70) dans la chaîne d'entraînement relie un côté de sortie (72) de l'unité d'entraînement à un côté d'entrée (44, 46, 48 ; 114) commun aux agencements d'embrayages (32, 34), du dispositif d'embrayage (11).

18. Procédé selon la revendication 17, **caractérisé en ce que** l'agencement d'amortisseur d'oscillations de torsion est réalisé sous forme de roue volante à deux masses (70).

19. Procédé selon l'une quelconque des revendications 1 à 18, **caractérisé par** au moins un agencement d'amortisseur d'oscillations de torsion (130, 132) associé à un côté de sortie (40 ou 42) de l'un des agencements d'embrayages (32, 34), éventuellement intégré dans un composant du côté de la sortie (40 ou 42) de l'agencement d'embrayage.

20. Procédé selon la revendication 19, **caractérisé en ce que** l'agencement d'amortisseur d'oscillations de torsion est associé à un disque d'embrayage (40 ou 42), éventuellement est intégré dans ce disque.

21. Chaîne d'entraînement de véhicule automobile, qui présente une unité d'entraînement, une boîte de vitesses (36) avec au moins deux arbres d'entrée de boîte de vitesses et un dispositif d'embrayage multiple, notamment un dispositif de double embrayage (11), comprenant un premier agencement d'embrayage (32) associé à un premier arbre d'entrée de boîte de vitesses et un deuxième agencement d'embrayage (34) associé à un deuxième arbre d'entrée de boîte de vitesses pour le transfert de couple entre l'unité d'entraînement et la boîte de vitesses, au moins un agencement d'amortisseur d'oscillations de torsion (70 ; 130, 132) étant inclus dans au moins une voie de transfert de couple comprenant au moins l'un des agencements d'embrayages entre l'unité d'entraînement et la boîte de vitesses,
**caractérisée par** une unité de commande électronique (10), qui est conçue et/ou programmée afin d'influencer et éventuellement maîtriser des états de mouvements de rotation, notamment des états d'oscillation, de la chaîne d'entraînement, pour faire fonctionner le dispositif d'embrayage (11) et éventuellement la boîte de vitesses (36) par l'intermédiaire d'un agencement d'actionneurs (16, 18, 20, 22) associé au dispositif d'embrayage et éventuellement à la boîte de vitesses, conformément au procédé selon au moins l'une quelconque des revendications précédentes.

22. Chaîne d'entraînement selon la revendication 21, **caractérisée en ce que** l'agencement d'amortisseur d'oscillations de torsion (70) relie dans la chaîne d'entraînement un côté de sortie (72) de l'unité d'entraînement à un côté d'entrée (44, 46, 48 ; 114) commun aux agencements d'embrayages (32, 34), du dispositif d'embrayage.

23. Chaîne d'entraînement selon la revendication 22, **caractérisée en ce que** l'agencement d'amortisseur d'oscillations de torsion est réalisé sous forme de roue volante à deux masses (70).

24. Chaîne d'entraînement selon l'une quelconque des revendications 21 à 23, **caractérisée par** au moins un agencement d'amortisseur d'oscillations de torsion (130, 132) associé à un côté de sortie (40 ou 42) de l'un des agencements d'embrayages (32, 34), éventuellement intégré dans un composant du côté de la sortie (40 ou 42) de l'agencement d'embrayage.

25. Chaîne d'entraînement selon la revendication 24, **caractérisée en ce que** l'agencement d'amortisseur d'oscillations de torsion est associé à un disque d'embrayage (40 ou 42), éventuellement est intégré dans ce disque.
